# EUROPEAN PATENT APPLICATION

(11) **EP 4 752 960 A1**
(43) Date of publication of application: **03.06.2026**
(21) Application number: 25203180.2
(22) Date of filing: 18.09.2025
(51) Int. Cl.: H01M 4/134, H01M 4/1395, H01M 4/36, H01M 4/38, H01M 4/62

(54) **NEGATIVE ELECTRODE ACTIVE MATERIAL, METHOD OF MANUFACTURING THE NEGATIVE ELECTRODE ACTIVE MATERIAL, AND NEGATIVE ELECTRODE INCLUDING THE NEGATIVE ELECTRODE ACTIVE MATERIAL**

(30) Priority: 27.11.2024 KR 20240172673
(71) Applicant: SAMSUNG SDI CO., LTD., Yongin-si, Gyeonggi-do 17084 (KR)
(72) Inventor: KIM, Hyejin, 17084 Yongin-si (KR); KIM, Jaewon, 17084 Yongin-si (KR); OH, Doori, 17084 Yongin-si (KR); KIM, Deok-Hyun, 17084 Yongin-si (KR); KIM, Youngugk, 17084 Yongin-si (KR); NAH, Jaehou, 17084 Yongin-si (KR)
(74) Representative: Marks & Clerk LLP

(57) **Abstract**

The present disclosure relates to a negative electrode active material, a method of manufacturing the negative electrode active material, and a negative electrode including the negative electrode active material. The negative electrode active material comprises a core formed by agglomerated first silicon particles; a shell formed by agglomerated second silicon particles; and an amorphous carbon coating layer surrounding the first silicon particles and the second silicon particles, wherein the shell is disposed on the core, and wherein an average particle diameter (D50) of the first silicon particles is greater than an average particle diameter (D50) of the second silicon particles, the average particle diameter (D50) of the first silicon particles being about 100 nm to about 140 nm, and the average particle diameter (D50) of the second silicon particles being about 40 nm to about 100 nm.

## Description

### BACKGROUND

The present invention relates to a negative electrode active material, a method for producing the negative electrode active material, and a negative electrode including the negative electrode active material.

With the rapid proliferation of battery-powered electronic devices such as mobile phones, notebook computers, and electric vehicles, the demand for rechargeable batteries with high energy density and large capacity has increased. Thus, extensive research and development efforts have been made to enhance the performance of rechargeable lithium batteries.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

### SUMMARY

The present invention provides a negative electrode active material having excellent capacity, efficiency, and cycle life characteristics, and a method of manufacturing the negative electrode active material.

The present invention provides a negative electrode having high structural stability.

The present invention provides a rechargeable lithium battery having a high energy density, excellent efficiency, and long cycle life.

According to a first aspect of the present invention there is provided a negative electrode active material including: a core formed by agglomerated first silicon particles; a shell formed by agglomerated second silicon particles; and an amorphous carbon coating layer surrounding the first silicon particles and the second silicon particles, wherein the shell is disposed on the core, wherein an average particle diameter (D50) of the first silicon particles is greater than an average particle diameter (D50) of the second silicon particles, wherein the average particle diameter (D50) of the first silicon particles is about 100 nm to about 140 nm, and wherein the average particle diameter (D50) of the second silicon particles is about 40 nm to about 100 nm.

According to a second aspect of the present invention there is provided a method for manufacturing a negative electrode active material, the method including: milling silicon precursors with a bead mill to produce first silicon particles and second silicon particles; preparing an agglomerate of the first silicon particles; forming a negative electrode active material precursor by coating the second silicon particles on the surface of the agglomerate; and forming an amorphous carbon coating layer on the negative electrode active material precursor, wherein an average particle diameter (D50) of the first silicon particles is greater than an average particle diameter (D50) of the second silicon particles, wherein the average particle diameter (D50) of the first silicon particle is about 100 nm to about 140 nm, and wherein the average particle diameter of the second silicon particle (D50) is about 40 nm to about 100 nm.

According to a third aspect of the present invention there is provided a negative electrode including a negative electrode current collector and a negative electrode active material layer on the negative electrode current collector, wherein the negative electrode active material in the negative electrode active materials layer includes: a core formed by agglomerated first silicon particles; a shell formed by agglomerated second silicon particles; and an amorphous carbon coating layer surrounding the first silicon particles and the second silicon particles, wherein the shell is disposed on the core, wherein an average particle diameter (D50) of the first silicon particles is greater than an average particle diameter (D50) of the second silicon particles; wherein each of the first silicon particles includes a first silicon oxide layer on a surface thereof, wherein each of the second silicon particles includes a second silicon oxide layer on the surface thereof, and wherein thicknesses of the first silicon oxide layer and a thickness of a second silicon oxide layer are each about 1 nm to about 10 nm.

At least some of the above and other features of the invention are set out in the claims.

### BRIEF DESCRIPTION OF DRAWINGS

FIG. 1 is a conceptual diagram of a rechargeable lithium battery according to embodiments of the present disclosure.
FIGS. 2 to 5 are views of a rechargeable lithium battery according to an embodiment. FIG. 2 shows a cylindrical battery, FIG. 3 shows a prismatic battery, and FIGS. 4 and 5 show pouch-type batteries.
FIG. 6 illustrates a negative electrode active material according to an embodiment of the present disclosure.
FIG. 7 illustrates a first silicon particle according to an embodiment of the present disclosure.
FIG. 8 illustrates a second silicon particle according to an embodiment of the present disclosure.
FIG. 9 is a flowchart of a method of manufacturing a negative electrode active material according to an embodiment of the present disclosure.
FIG. 10 illustrates a method of producing the negative electrode active material precursor according to an embodiment of the present disclosure.

### DETAILED DESCRIPTION OF EMBODIMENTS

To fully understand the configuration and effects of the present disclosure, some embodiments will be described with reference to the accompanying drawings. However, the present disclosure is not limited to the following embodiments and may be implemented in various forms. The embodiments are provided solely to illustrate the present disclosure and to enable those skilled in the art to fully understand its scope.

In this description, when an element is described as being "on" another element, it may be directly on the other element, or one or more intervening elements may be present. In the drawings, certain thicknesses may be exaggerated to better illustrate technical details. Throughout the specification, like reference numerals indicate like elements. The embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The embodiments described and illustrated herein include complementary variations.

The terms used in this description serve only to explain various embodiments and are not intended to limit the present disclosure. Unless explicitly stated otherwise, singular forms may also include plural forms. The terms "comprises/includes" and "comprising/including" do not exclude the presence or addition of one or more other components. The phrases "A or B," "at least one of A and B," "at least one of A or B," "A, B, or C," "at least one of A, B, and C," and "at least one of A, B, or C" include any one or all possible combinations of the listed elements.

In this description, the phrase "combination thereof" may refer to a mixture, a stack, a composite, a copolymer, an alloy, a blend, or a reaction product.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) may be measured using widely known methods, such as a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

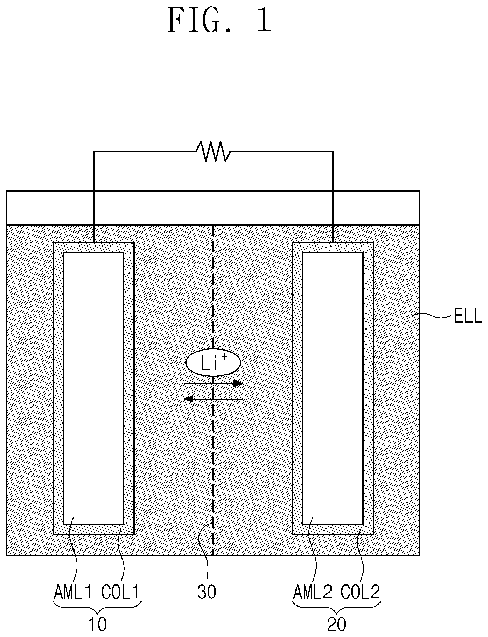

FIG. 1 is a cross-sectional view of a rechargeable lithium battery according to embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. That is, the separator 30 may be disposed between the positive electrode 10 and the negative electrode 20. The positive electrode 10, the negative electrode 20 and the separator 30 may be in contact with the electrolyte solution ELL. In particular, the positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

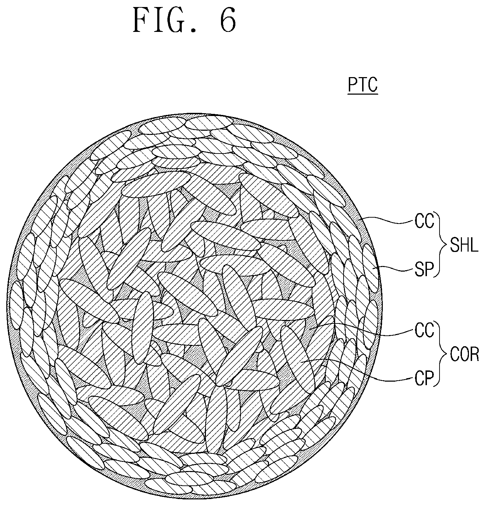

The cathode 20 will be described below with reference to FIG. 6.

### Positive Electrode 10

The positive electrode 10 for a rechargeable lithium battery may include a current collector COL1 and a positive electrode active material layer AML1 on the current collector. The positive electrode active material layer AML1 may include a positive electrode active material and may further include a binder and/or a conductive material (e.g., an electrically conductive material). The positive electrode 10 may further include an additive that may serve as a sacrificial positive electrode.

An amount of the positive electrode active material may be about 90 wt% to about 99.5 wt% based on 100 wt% of the positive electrode active material layer AML1. Amounts of the binder and the conductive material may be about 0.5 wt% to about 10 wt%, respectively, based on 100 wt% of the positive electrode active material layer AML1.

The binder serves to attach the positive electrode active material particles to each other and also to attach the positive electrode active material to the current collector COL1. Non-limiting examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like.

The conductive material may be used to impart conductivity (e.g., electrical conductivity) to the electrode. Any material that does not cause chemical change (e.g., does not cause an undesirable chemical change in the rechargeable lithium battery) and conducts electrons may be used. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder or a metal fiber; a conductive polymer such as a polyphenylene derivative; or a mixture thereof.

Aluminium may be used as the current collector COL1, but the present disclosure is not limited thereto.

### Positive Electrode Active Material

The positive electrode active material may include a compound (lithiated intercalation compound) that is capable of intercalating and deintercalating lithium. In some examples, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof. As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8). In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may provide high capacity and may be used in a high-capacity, high-density rechargeable lithium battery.

### Separator 30

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of a polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g. TEFLON^{®}), or a copolymer or mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), fluoroethylene carbonate (FEC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN, where R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Negative Electrode Active Material And Method For Producing The Negative Electrode Active Material

FIG. 6 is a schematic cross-sectional view of a negative electrode active material according to one embodiment of the present invention. Referring to FIG. 6, the negative electrode active material PTC includes first silicon particles CP, second silicon particles SP, and an amorphous carbon coating layer CC. In addition, the negative electrode active material PTC includes a core COR and a shell SHL disposed on the core COR.

In detail, the negative electrode active material PTC includes a core COR formed by agglomerated first silicon particles CP, a shell SHL formed by agglomerated second silicon particles SP, and an amorphous carbon coating layer CC surrounding the first silicon particles CP and the second silicon particles SP. The core COR of the negative electrode active material PTC includes first silicon particles CP and may include an amorphous carbon coating layer CC surrounding the core. The shell SHL of the negative electrode active material PTC includes second silicon particles SP and may include an amorphous carbon coating layer CC surrounding the shell.

The negative electrode active material PTC includes first silicon particles CP and second silicon particles SP that are different sizes. An average particle diameter (D50) of the first silicon particles is greater than that, i.e. the average particle diameter (D50), of the second silicon particles. When the average particle diameter (D50) of the first silicon particles CP located in the core COR is greater than the average particle diameter (D50) of the second silicon particles SP located in the shell SHL, the core COR may have a higher porosity than the shell SHL. In such a configuration, volume expansion that occurs during charging and discharging may be alleviated due to pores in the core COR. In addition, the shell SHL may densely surround the core COR, thereby suppressing side reactions with the electrolyte.

The average particle diameter (D50) of the first silicon particles CP is about 100 nm to about 140 nm, and may be, for example, about 105 nm to about 135 nm, or about 110 nm to about 130 nm. The average particle diameter (D50) of the second silicon particles SP is about 40 nm to about 100 nm, and may be, for example, about 45 nm to about 95 nm, or about 50 nm to about 90 nm. When the average particle diameters D50 of the first silicon particles CP and the second silicon particles SP are in these ranges, the core COR may have a larger inter-particle space than the shell SHL due to the relatively large first silicon particles CP such that the problem of volume expansion that may occur during charging and discharging is alleviated. In addition, the second silicon particles SP, which are relatively small, densely wrap the surface of the negative electrode active material PTC so that side reactions with the electrolyte solution may be suppressed. When the average particle diameter (D50) of the first silicon particles CP and the second silicon particles SP are not in the above ranges, side reactions with the electrolytic solution may increase, and silicon may expand during charging and discharging, resulting in structural instability.

The average particle diameter (D50) of the first silicon particles CP and the second silicon particles SP may be measured by a particle size analyzer or by a transmission electron microscope (TEM) photograph or a scanning electron microscope (SEM) photograph.

For example, before the negative electrode active material PTC is produced, when the first silicon particles CP and the second silicon particles SP may be separated from each other, the average particle diameter (D50) may be measured using a particle size analyzer. The average particle diameter (D50) measured using a particle size analyzer means the diameter of particles having a cumulative volume of 50% by volume.

As another example, after being produced as the negative electrode or the negative electrode active material PTC, the average particle diameter (D50) of the first silicon particles CP and the second silicon particles SP may be measured by a scanning electron microscope (SEM) photograph. However, when measuring using a scanning electron micrograph, when the silicon particles are not spherical, measurement values for a large number of cross sections may be obtained and averaged. The average particle diameter (D50) using a scanning electron microscope may be based on a projected area equivalent diameter. In this case, the projected area equivalent diameter may be a method of calculating a diameter of an equivalent spherical particle having the same area based on a projected area seen in a 2D cross section of the particle.

The amorphous carbon coating layer CC includes amorphous carbon. The amorphous carbon may surround the first silicon particles CP and the second silicon particles SP. In particular, the amorphous carbon may be located between the first silicon particles CP and the second silicon particles SP, between the first silicon particles CP, or between the second silicon particles SP. The amorphous carbon coating layer CC may be disposed on the first silicon particles CP and the second silicon particles SP, and may surround the first silicon particles CP and the second silicon particles SP.

The amorphous carbon may include at least one of non-graphitizable carbons (hard carbon), graphitizable carbon (soft carbon), or a combination thereof. For example, the amorphous carbon may be at least one of soft carbon, hard carbon, mesophase pitch carbide, calcined coke, or a combination thereof. The amorphous carbon may have excellent hardness and electrical conductivity.

The amorphous carbon coating layer CC may have a D band (peak position: around 1350±50 cm ⁻¹) and a G band (peak position of around 1580±50 cm⁻¹) in a Raman spectrum obtained by Raman spectroscopy. Herein, the D/G ratio may be defined as the ratio of the maximum peak intensity of the D band to the maximum peak intensity of the G band.

The D/G ratio of the amorphous carbon coating layer CC may be, for example, about 0.5, about 0.6, about 0.7, about 0.8 or about 0.9 or more. For example, the D/G ratio of the amorphous carbon coating layer (CC) may be about 0.5 to about 1.5, about 0.6 to about 1.4, about 0.7 to about 1.3, about 0.8 to about 1.2, or about 0.9 to about 1.1. When the ratio of the amorphous carbon coating layer CC is in these ranges, the electrical conductivity of the negative electrode active material may be excellent.

An amount of the amorphous carbon coating layer CC may be, for example, from about 20 wt% to about 50 wt%, from about 25 wt% to about 50 wt%, or from about 30 wt% to about 45 wt% based on a total weight of the negative electrode active material PCT. When the amount of the amorphous carbon coating layer CC is in these ranges, a rechargeable lithium battery with excellent cycle life characteristics and capacity may be provided. When the amount of the amorphous carbon coating layer CC is less than these ranges, electrical conductivity may not be sufficient and the cycle characteristics may be poor. When the amount of the amorphous carbon coating layer CC exceeds these ranges, the capacity and efficiency may decrease.

The average particle diameter (D50) of the negative electrode active material PTC may be about 6 µm to about 12 µm, about 7 µm to about 11 µm, or about 8 µm to about 10 µm. The average particle diameter (D50) of the negative electrode active material PTC means the average particle diameter D50, which means the diameter of particles having a cumulative volume of 50% by volume in the particle size distribution. The average particle diameter (D50) of the negative electrode active material PTC may be measured with a particle size analyzer with a transmission electron microscope (TEM) photograph, or with a scanning electron microscope (SEM) photograph. When the average particle diameter (D50) of the negative electrode active material PTC is in these ranges, side reactions with the electrolytic solution during battery charging and discharging may be reduced and mechanical stability may be excellent, thereby improving the cycle life characteristics of the rechargeable lithium battery.

A weight ratio of the first silicon particles CP to the second silicon particles SP in the negative electrode active material PTC may be, for example, about **1:4** to about 7:3, or about 1:4 to about 3:2. When the weight ratio of the first silicon particles CP to the second silicon particles SP is in these ranges, the structural stability during charging and discharging of the rechargeable lithium battery may be excellent and the energy density may be increased. When the weight ratio of the first silicon particles CP to the second silicon particles SP is outside of these ranges, side reactions may not be effectively prevented and the cycle characteristics may be poor.

As noted above, the negative electrode active material PTC includes a core COR and a shell SHL disposed on the core COR. The shell SHL may coat the core COR. The core COR of the negative electrode active material PTC includes first silicon particles CP and may include an amorphous carbon coating layer CC surrounding the core COR. The shell SHL of the negative electrode active material PTC includes second silicon particles SP and may include an amorphous carbon coating layer CC surrounding the shell SHL.

A thickness ratio of the core COR to the shell SHL of the negative electrode active material PTC may be, for example, about 6:4 to about 9:1. When the thickness ratio between the core to the shell satisfies is in this range, energy efficiency may be increased as a result of the combined advantages of the core (COR), which exhibits high efficiency and capacity during charging and discharging, and the shell (SHL), which provides excellent cycle characteristics. The thickness of the core COR and the shell SHL of the negative electrode active material PTC may vary depending on the respective amounts of the first silicon particles CP and the second silicon particles SP in the negative electrode active materials PTC.

Herein, the thickness of the core COR means the distance from the center of the negative electrode active material PTC to the boundary between the core COR and the shell SHL. When the negative electrode active material PTC is not spherical, the thickness is an average value of the distance from the center of the negative electrode active material PTC to the boundary between the core COR and the shell SHL. The thickness of the shell SHL may be obtained by subtracting the thickness of the core COR from the distance from the center of the negative electrode active material PTC to the outermost edge of the negative electrode actively material PTC. Alternatively, it may mean a distance from the outermost edge of the negative electrode active material PTC to the boundary between the core COR and the shell SHL. When the negative electrode active material PTC is not spherical, the thickness of the SHL may mean an average value.

The "silicon particles" according to the present disclosure means the first silicon particles CP and the second silicon particles SP. The silicon particles may include a silicon oxide layer and a silicon core composed of pure silicon. The silicon oxide layer may be formed on the surface of the silicon particles and may be located on the silicon core.

The shape of the silicon particles is not limited in the present disclosure. According to example embodiments, the first silicon particles CP and the second silicon particles SP are plate-like, oblate-spherical, or spherical.

According to an embodiment, the silicon particles may be crystalline silicon. The crystalline silicon may improve the capacity and efficiency of the negative electrode active material.

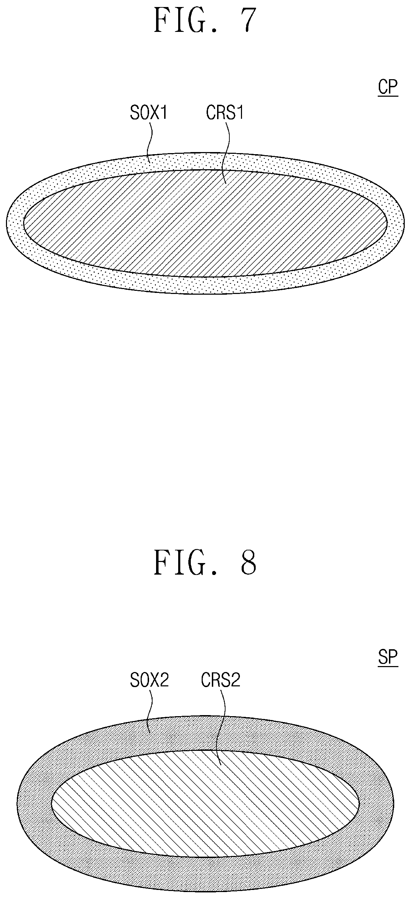

FIG. 7 illustrates a first silicon particle CP according to an embodiment of the present disclosure. FIG. 8 illustrates a second silicone particle SP according to an embodiment of the present disclosure.

Referring to FIGS. 7 and 8, the first silicon particles CP may include a first silicon oxide layer SOX1 and a first silicon core CRS 1. The second silicon particles SP may include a second silicon oxide layer SOX2 and a second silicon core CRS2. That is, the first silicon oxide layer SOX1 may be located on the first silicon core CRS1, and the second silicon oxide layer SOX2 may be located on the second silicon core CRS2. The first silicon core CRS1 and the second silicon core CRS2 may be crystalline silicon.

In examples, the first silicon oxide layer SOX1 may be located on the surface of the first silicon core CRS 1, which is crystalline silicon, in a discontinuous manner, in an island type form, or in a dot type form. Similarly, the second silicon oxide layer SOX2 may be located on the surface of the second silicon core CRS2, which is crystalline silicon, in a discontinuous manner, in an island type form, or in a dot type form. In other examples, the first silicon oxide layer SOX1 may be continuously located or may be present as a layer on the surface of the crystalline first silicon core CRS1, and the second silicon oxide layer SOX2 may be continuously located or may be present in a layer type form on the surface of the crystalline second silicon core CRS2. A silicon oxide layer such as the first silicon oxide layer SOX1 or the second silicon oxide layer SOX2 may effectively suppress volume expansion of crystalline silicon that may occur in the first and second silicon cores CRS 1 and CRS2 during charging and discharging. Further, the silicon oxide layer may prevent structural collapse. In addition, the silicon oxide layer may reduce the area where crystalline silicon is exposed to the electrolytic solution and thereby prevent a side reaction of the electrolyte solution.

The first silicon oxide layer SOX1 and the second silicon oxide layer SOX2 may be formed, for example, in a manufacturing process of silicon particles, a storage process of the silicon particles, a manufacturing process of a negative electrode active material PTC, a manufacturing process of the negative electrode, a charging and discharging process of the rechargeable lithium battery, or the like. In a particular embodiment, the first silicon oxide layer SOX1 and the second silicon oxide layer SOX2 may be formed in a process of milling each particle.

The thicknesses of the first silicon oxide layer SOX1 and the second silicon oxide layer SOX2 may each be, for example, about 1 nm to about 10 nm, about 1 nm to about 8 nm, about 1 nm to about 5 nm, or about 2 nm to about 5 nm, respectively. When the first silicon oxide layer SOX1 and the second silicon oxide layer SOX2 are such thicknesses, the silicon oxide layers may have excellent mechanical strength and may reduce side reactions to the electrolytic solution. When the thickness is greater than these ranges, the capacity of the rechargeable lithium battery may decrease.

The thicknesses of the first silicon oxide layer SOX1 and the second silicon oxide layer SOX2 may be different depending on a manufacturing process or the like. The thickness of the first silicon oxide layer SOX1 may be equal to or less than the thickness of the second silicon oxide layer SOX2. This difference in thicknesses may be because milling during the production of the first silicon particles CP is performed for a shorter time to produce the first silicon particles CP having a larger average particle diameter (D50) than the second silicon particles SP. When the thickness of the first silicon oxide layer SOX1 is less than the thickness of the second silicon oxide layer SOX2, the volume of the first silicon core CRS1 of the first silicon particles CP present in the core COR may increase, thereby resulting in improved capacity characteristics. In addition, irreversible reactions caused by the silicon oxide layer may be reduced, leading to improved initial efficiency characteristics. Also, the second silicon oxide layer SOX2 is thick so that the mechanical stability of the second silicon particles SP located on the outer periphery of the negative electrode active material PTC may be increased.

Herein, the thickness of the first silicon oxide layer SOX1 may mean a distance from the outermost edge of the first silicon particles CP to the boundary line between the first silicon oxide layers SOX1 and the first silicon cores CRS 1. When the first silicon particles CP are not spherical, the thickness may mean an average value thereof. The thickness of the second silicon oxide layer SOX2 may mean a distance from the outermost edge of the second silicon particles SP to the boundary line between the second silicon oxide layers SOX2 and the second silicon cores CRS2. When the second silicon particles SP are not spherical, the thickness may mean an average value thereof.

The average value of measuring the thickness of the first silicon oxide layer SOX1 or the second silicon oxide layer SOX2 may mean, for example, an average value of values measured by arbitrarily selecting about 100 first silicon particles CP and second silicon particles SP in a cross section of the negative electrode active material PTC in an electron micrograph. The thicknesses of the first silicon oxide layer SOX1 and the second silicon oxide layer SOX2 may be measured using a transmission electron microscope (TEM), a scanning electron microscope (SEM), an X-ray photoelectron spectroscopy (XPS), an atomic force microscope (AFM), or the like. But the present disclosure is not limited to these examples, and the method for measurement may be appropriately selected by those skilled in the art.

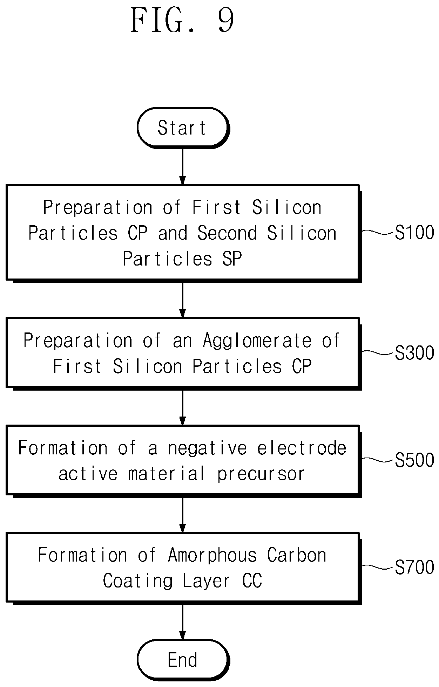

FIG. 9 illustrates a flowchart showing a method of manufacturing a negative electrode active material according to an embodiment of the present disclosure. According to FIG. 9, a method of manufacturing a negative electrode active material PTC includes the steps of: milling silicon precursors with a bead mill to produce first silicon particles CP and second silicon particles SP (S100); preparing an agglomerate of the first silicon particles CP (S300); forming a negative electrode active material precursor by coating the second silicon particles on the surface of the agglomerate (S500); and forming an amorphous carbon coating layer CC on the negative electrode active material precursor (S700).

The first silicon particles CP are produced by milling a silicon precursor with a bead mill. The second silicon particles SP are produced by milling a silicon precursor with a bead mill. The silicon precursor may be crystalline silicon. The first silicon particles CP and the second silicon particles SP may be formed from silicon precursors that are the same size or may be formed from silicon precursors that are different sized.

During the milling of the silicon precursors, a milling time for the first silicon particles and a milling time of the second silicon particles may be different. In an embodiment, silicon precursors having diameters of about 1 µm may be milled with a bead mill to produce first silicon particles CP and second silicon particles SP. When the first silicon particles CP and the second silicon particles SP are formed from silicon precursors of the same size, the milling time for producing the first silicon particles CP may be shorter than the milling time to produce the second silicon particles SP.

The thicknesses of the first silicon oxide layer SOX1 in the first silicon particles CP and the second silicon oxide layer SOX2 in the second silicon particles SP may be different depending on the milling time. The longer the milling time, the more oxidation occurs on the surface of the silicon particles, and the thickness of the silicon oxide layer may be increased.

The first silicon particles CP are agglomerated to prepare an agglomerate (S300). The agglomerate may be formed, for example, using a spray drying process by preparing a slurry including the first silicon particles CP.

The second silicon particles SP are coated on the surface of the agglomerate to form a negative electrode active material precursor (S500). The negative electrode active material precursor may have a structure in which multiple layers of the second silicon particles SP surround the surface of the agglomerated first silicon particles CP. The negative electrode active material precursor means a structure having a core consisting only of first silicon particles CP and a shell structure formed of second silicon particles SP surrounding the core.

The negative electrode active material precursor is produced in the form of coating the second silicon particles SP on the surface of an agglomerate of the first silicon particles CP. This may be done, for example, via a spray drying process.

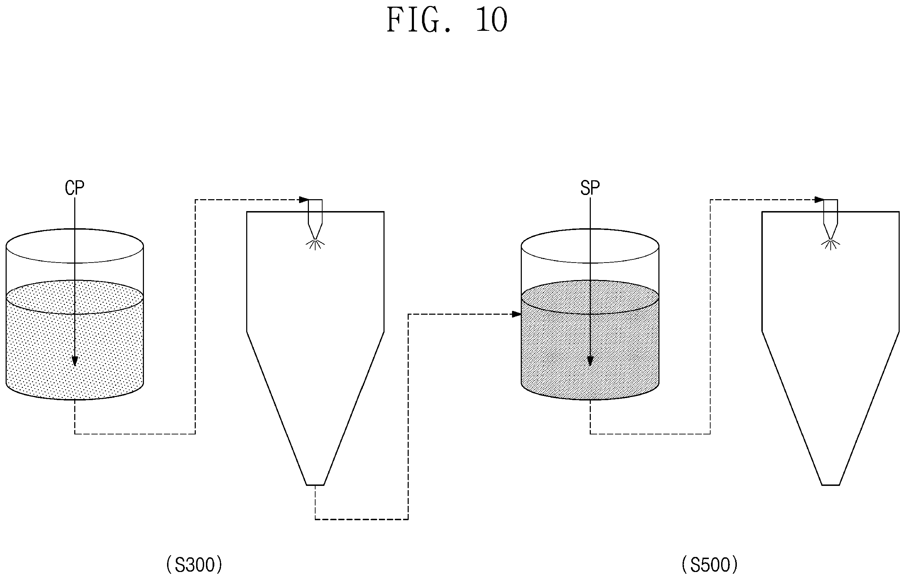

FIG. 10 illustrates a method of producing the negative electrode active material precursor according to an embodiment of the disclosure. Referring to FIG. 10, a slurry containing the first silicon particles CP may be prepared, and an agglomerate of the first silicon particles CP may be formed using a spray drying process (S300). Then, a slurry containing the agglomerates and the second silicon particles SP may be prepared, and the precursor of the negative electrode active material may be formed again using a spray drying process (S500). When the spray drying process is performed with the slurry containing the large-sized agglomerates of the first silicon particles CP and the second silicon particles SP, the negative electrode active material precursor may be produced in a structure in which the second silicon particles SP are coated on the periphery of the agglomerates of the first silicon particles CP. However, this may be only one method of producing the negative electrode active material precursor, and the present disclosure is not limited to the above method as long as a negative electrode active material precursor as described herein is formed.

The negative electrode active material is produced by coating the negative electrode active material precursor with amorphous carbon (S700). The amorphous carbon may include, for example, at least one of soft carbon, hard carbon, mesophase pitch carbide, calcined coke, or a combination thereof.

The amorphous carbon forms an amorphous carbon coating layer CC. The amorphous carbon coating layer CC may surround the first silicon particles CP and the second silicon particles SP. The amorphous carbon coating layer CC may fill a space between the first silicon particles CP and the second silicon particles SP. More specifically, the amorphous carbon coating layer CC may fill a space between the first silicon particles CP and the second silicon particles SP, thereby increasing mechanical stability of the negative electrode active material PTC.

The amorphous carbon coating layer CC may be formed, for example, by mixing the negative electrode active material precursor and the pitch and then performing heat treatment.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material (e.g., an electrically conductive material). For example, the negative electrode active material layer AML2 may include about 80 wt% to about 99 wt% of the negative electrode active material, about 0.5 wt% to about 10 wt% of the binder, and about 0.5 wt% to about 10 wt% of the conductive material.

The binder may serve to attach the negative electrode active material particles to each other and also to attach the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, poly amideimide, polyimide, or a combination thereof.

The aqueous binder may be a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons may be used in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The negative current collector COL2 may include a copper foil, a nickel foil, a stainless steel foil, a titanium foil, a nickel foam, a copper foam, a polymer substrate coated with a conductive metal, or a combination thereof.

### Rechargeable Lithium Battery

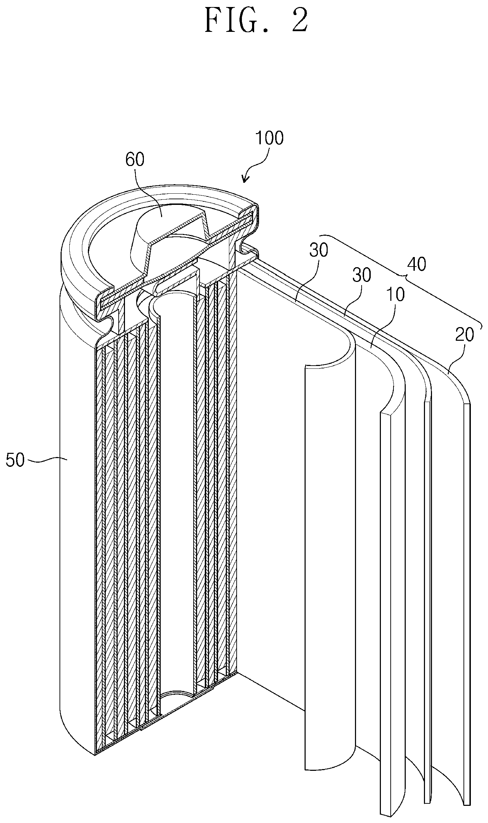

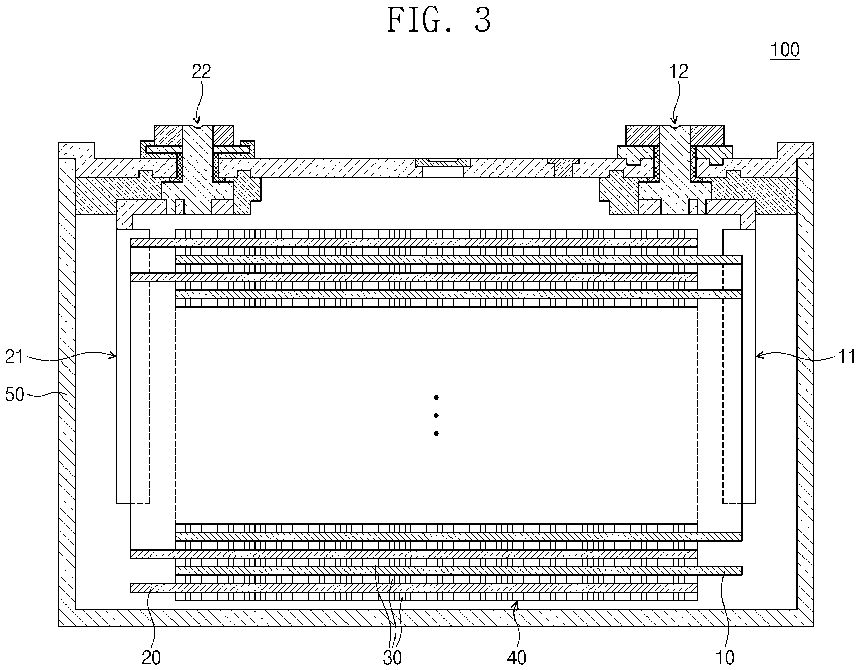

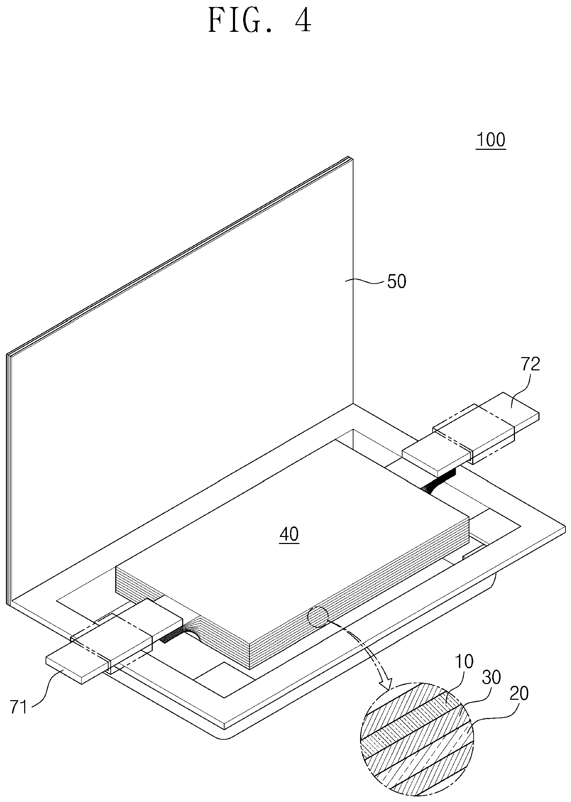

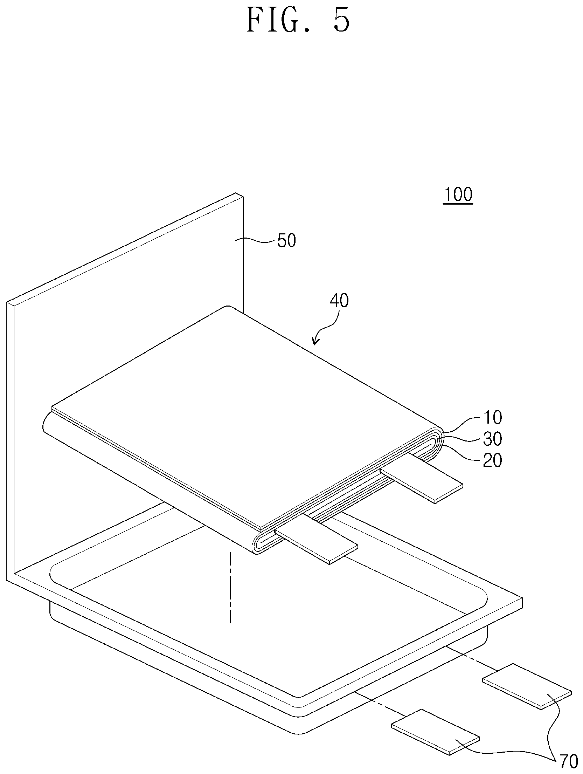

The rechargeable lithium battery may be a cylindrical, prismatic, pouch, or coin-type battery depending on its shape. FIGS. 2 to 5 are schematic views of rechargeable lithium batteries according to embodiments of the present disclosure. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). As shown in FIG. 2, the rechargeable lithium battery 100 may include a sealing member 60 sealing the case 50. In the example depicted in FIG. 3, the rechargeable lithium battery 100 includes a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 forming an electrical path for inducing the current formed in the electrode assembly 40 to outside of the battery 100.

Rechargeable lithium batteries according to embodiments may be used in automobiles, mobile phones, and/or various types of electric devices, as non-limiting examples.

The following Examples and Comparative Examples are provided in order to highlight characteristics of one or more embodiments, but it will be understood that the Examples and Comparative Examples are not limiting on the scope of the present disclosure,. Further, it will be understood that the embodiments are not limited to the particular details described in the Examples and Comparative Examples.

### Example 1

### (Production of First Silicon Particles and Second Silicon Particles)

Silicon precursors having an average diameter of about 1 µm were milled using a bead mill (Labstar, NETZSCH). A bead size of about 100 nm was used, and the volume ratio of the beads to the silicon precursor was about 8:2. Milling was performed until the average particle diameter (D50) of the first silicon particles and the second silicon particles became 120 nm and 70 nm, respectively, as measured by a particle size analyzer.

### (Production of Negative Electrode Active Material)

A first slurry was prepared by mixing the first silicon particles with ethanol at a weight ratio of about 1:9. The first slurry was treated in a spray dry mode at 150 °C to produce agglomerates in which the first silicon particles were agglomerated.

The agglomerates and the second silicon particles were mixed in an ethanol solvent to prepare a second slurry. The second slurry was treated in a spray dry mode at 150 °C to form a negative electrode active material precursor. At this time, the agglomerate became a core, and the second silicon particles agglomerated in a manner that formed coating on the surface of the agglomerate. Thus, the negative electrode active material precursor was formed.

The negative electrode active material precursor was mixed with pitch and subjected to heat treatment at about 950 °C in an N₂ atmosphere to produce a negative electrode active material. The weight ratio of the first silicon particles to the second silicon particles in the negative electrode active material is about 5:5. The amount of carbon, e.g. the amount of the amorphous carbon coating layer, was about 40 wt% based on the total weight of the negative electrode active material. The average particle diameter (D50) of the produced negative electrode active material was about 9 µm.

### Example 2

Example 2 was produced in the same manner as in Example 1 except that the average particle diameter (D50) of the first silicon particles was about 120 nm and the average particle diameter (D50) of the second silicon particles was about 40 nm.

### Example 3

Example 3 was produced in the same manner as in Example 1 except that the average particle diameter (D50) of the first silicon particles was about 140 nm and the average particle diameter (D50) of the second silicon particles was about 40 nm.

### Example 4

A negative electrode active material was produced in the same manner as in Example 1 except that the amount of carbon, e.g. the amount of the amorphous carbon coating layer, was about 25 wt% based on the total weight of the negative electrode active material.

### Example 5

Example 5 was produced in the same manner as in Example 1 except that the weight ratio of the first silicon particles to the second silicon particles on the negative electrode active material was about 3:7.

### Comparative Example 1

A negative electrode active material was produced in the same manner as in Example 1 except that the negative electrode active material was formed from only silicon particles having an average particle diameter of about 100 nm.

### Comparative Example 2

A negative electrode active material was produced in the same manner as in Example 1 except that the negative electrode active material was formed from only silicon particles having an average particle diameter of about 120 nm.

### Comparative Example 3

Comparative Example 3 was produced in the same manner as in Example 1 except that the average particle diameter (D50) of the first silicon particles was about 150 nm and the average particle diameter (D50) of the second silicon particles was about 70 nm.

### Comparative Example 4

Comparative Example 4 was produced in the same manner as in Example 1 except that the average particle diameter (D50) of the first silicon particles was about 70 nm and the average particle diameter (D50) of the second silicon particles was about 120 nm.

### Comparative Example 5

Comparative Example 5 was produced in the same manner as in Example 1 except that the average particle diameter (D50) of the first silicon particles was about 40 nm and the average particle diameter (D50) of the second silicon particles was about 140 nm.

### Comparative Example 6

Comparative Example 6 was produced in the same manner as in Example 1 except that the average particle diameter (D50) of the first silicon particles was about 40 nm and the average particle diameter (D50) of the second silicon particles was about 120 nm.

Table 1 below summarizes the respective examples and comparative examples.

**Table 1**

| | First Silicon Particles (nm)* | Second Silicon Particles (nm)* | Carbon amount (wt %)** | First Silicon Particle : Second Silicon Particle (Weight Ratio) |
|---|---|---|---|---|
| Example 1 | 120 | 70 | 40 | 50:50 |
| Example 2 | 120 | 40 | 40 | 50:50 |
| Example 3 | 140 | 40 | 40 | 50:50 |
| Example 4 | 120 | 70 | 25 | 50:50 |
| Example 5 | 120 | 70 | 40 | 30:70 |
| Comparative Example 1 | 100 | - | 40 | 100 |
| Comparative Example 2 | 120 | - | 40 | 100 |
| Comparative Example 3 | 150 | 70 | 40 | 50:50 |
| Comparative Example 4 | 70 | 120 | 40 | 50:50 |
| Comparative Example 5 | 40 | 140 | 40 | 50:50 |
| Comparative Example 6 | 40 | 120 | 40 | 50:50 |

| | | | | |
|---|---|---|---|---|
| * The size of the first silicon particles and the second silicon particles means an average particle diameter (D50). ** The amount of carbon, e.g. the amount of the amorphous carbon coating layer, is based on the total weight of the negative electrode active material. | | | | |

### Negative Electrode Preparation

About 6 g of the negative electrode active material prepared by the above Examples 1 to 5 and Comparative Examples 1 to 6, about 2 g of carboxymethyl cellulose and about 2 g of styrene butadiene rubber were mixed to prepare a negative electrode slurry. The negative electrode slurry was applied to a Cu foil, dried, and rolled to prepare a negative electrode.

### Manufacture of Rechargeable Lithium Battery

A positive electrode was prepared by mixing about 96 wt% of LiCoO₂, about 2 wt% of polyvinylidenefluoride (PVdF) and about 2 wt% of carbon black in N-methylpyrrolidone to prepare a slurry, which was applied to an Al foil, dried and rolled. The weight percentages (wt %) are based on the total weight of the solid amount in the slurry.

A coin full cell was produced using the negative electrode and a positive electrode, a separator made of polyethylene, and an electrolytic solution. As the electrolytic solution, a solution obtained by dissolving about 1.5 M of LiPF₆ in an organic solvent obtained by mixing ethylene carbonate (EC), diethyl carbonate (DEC), and dimethyl carbonate (DMC) at a volume ratio of about 2:1:7 and adding about 3.5 parts by weight of fluoroethylene carbonate (FEC) to 100 parts by weight of the organic solvent was used.

In addition, a coin half cell was fabricated by replacing the positive electrode in the coin full cell with a 0.5 mm lithium metal as a counter electrode.

### Evaluation Example 1 - Evaluation of Battery Characteristics

Characteristics of rechargeable lithium batteries including the negative electrode active materials according to Examples 1 to 5 and Comparative Examples 1 to 6 were evaluated.

A coin half cell (as described above) was charged to 0.01 V under a constant current (0.1 C) condition, and the coin half cell was subsequently charged under a constant voltage condition until the current decreased to 0.01 C. After a 10-minute rest, the cell was discharged to 1.5 V under a constant current (0.1 C) condition to perform initial charge and discharge process, and the initial charge and discharge capacities were evaluated. The ratio of the initial discharge capacity to the measured initial charge capacity was calculated and expressed as initial efficiency.

The coin full cell was charged to 4.2 V under a constant current (0.1 C) condition, and the coin full cell was subsequently charged until the current decreased to 0.01 C under a constant voltage condition. After a 10-minute rest, the battery was discharged to 2.5 V under a constant current (0.1 C) condition to stably form an initial SEI film, and further charged to 4.0 V under a constant voltage (1.0 C) condition, and then charged until the current decreased to 0.01 C under a constant voltage condition. After another 10-minute rest, the cell was repeatedly charged and discharged under a constant current (1.0 C) condition until reaching 2.5 V, and a time point at which the cycle life rapidly declined was confirmed. The results are shown in Table 2.

**Table 2**

| | Coin Half Cell Initial Efficiency (%) | Coin Half Cell Initial Discharge Capacity (mAh/g) | Coin Full Cell Drop Life Time Point (Cycle) |
|---|---|---|---|
| Example 1 | 87.0 | 1680 | 500 |
| Example 2 | 86.0 | 1620 | 671 |
| Example 3 | 86.5 | 1661 | 517 |
| Example 4 | 87.3 | 2035 | 450 |
| Example 5 | 86.2 | 1650 | 589 |
| Comparative Example 1 | 86.9 | 1700 | 348 |
| Comparative Example 2 | 88.2 | 1785 | 240 |
| Comparative Example 3 | 87.7 | 1744 | 310 |
| Comparative Example 4 | 86.2 | 1610 | 320 |
| Comparative Example 5 | 84.1 | 1430 | 210 |
| Comparative Example 6 | 85.3 | 1510 | 300 |

Referring to Table 2, when silicon particles of the same size are used as in Comparative Examples 1 and 2, there is insufficient space to mitigate volume expansion, and surface side reactions may not be effectively suppressed, which may result in inferior cycle characteristics. But when the size of the first silicon particles forming the core is larger than the size of the second silicon particles forming the shell as in the Examples, it can be seen that excellent capacity and cycle life characteristics are obtained.

However, even when there is a size difference between the silicon particles in the shell and the core, it can be seen that, as in Comparative Example 3, excessively large first silicon particles lead to deterioration in cycle characteristics.

Similarly, when the first silicon particles are smaller than the second silicon particles as in Comparative Examples 4 to 6, it can be seen that separation of the core and the shell occurs due to a difference in volume expansion between the core and the shell during charging and discharging, resulting in deterioration of efficiency, capacity, and cycle life characteristics.

In summary, it was confirmed that the batteries of Examples 1 to 5 may be driven for 400 cycles or more, the initial discharge capacity is 1600 mAh/g or more, and the initial efficiency is also 86% or more. Thus, all of the efficiency, capacity, and cycle life characteristics are excellent. That is, when the average particle diameter (D50) of the first silicon particles is greater than the average particle diameter (D50) of the second silicon particles, the particle sizes are neither excessively large nor small, and both the weight ratio between the first and second silicon particles and the carbon amount are appropriate, and the efficiency, capacity, and cycle life characteristics are all excellent.

By using the negative electrode active material according to the present disclosure, a structurally stable negative electrode may be produced, and a rechargeable lithium battery having excellent capacity and cycle life characteristics may be produced. By using the method of producing a negative electrode active material according to the present disclosure, it is possible to produce the negative electrode active material having excellent capacity, efficiency, and cycle life characteristics.

While the present disclosure has been described with reference to preferred embodiments, these embodiments are provided for illustrative purposes only and do not limit the scope of the present disclosure. Various modifications and equivalent arrangements may be made. The described embodiments should be regarded as examples rather than limitations of the present disclosure.

## Claims

1. A negative electrode active material comprising:
a core formed by agglomerated first silicon particles;
a shell formed by agglomerated second silicon particles; and
an amorphous carbon coating layer surrounding the first silicon particles and the second silicon particles,
wherein the shell is disposed on the core,
wherein an average particle diameter (D50) of the first silicon particles is greater than an average particle diameter (D50) of the second silicon particles,
wherein the average particle diameter (D50) of the first silicon particles is about 100 nm to about 140 nm, and
wherein the average particle diameter (D50) of the second silicon particles is about 40 nm to about 100 nm.

2. The negative electrode active material as claimed in claim 1, wherein an amount of the amorphous carbon coating layer is about 20 wt% to about 50 wt% based on a total weight of the negative electrode active material.

3. The negative electrode active material as claimed in claim 1 or claim 2, wherein an average particle diameter (D50) of the negative electrode active material is about 6 µm to about 12 µm.

4. The negative electrode active material as claimed in any preceding claim, wherein a weight ratio of the first silicon particles to the second silicon particles in the negative electrode active material is about 1:4 to about 7:3.

5. The negative electrode active material as claimed in any preceding claim, wherein a thickness ratio of the core to the shell is about 6:4 to about 9:1.

6. The negative electrode active material as claimed in any preceding claim, wherein each of the first silicon particles comprises a first silicon oxide layer on a surface thereof,
wherein each of the second silicon particles comprises a second silicon oxide layer on a surface thereof, and
wherein thicknesses of the first silicon oxide layer and the second silicon oxide layer are each about 1 nm to about 10 nm.

7. The negative electrode active material as claimed in claim 6, wherein the thickness of the first silicon oxide layer is less than the thickness of the second silicon oxide layer.

8. The negative electrode active material as claimed in any preceding claim, wherein a D/G ratio of the amorphous carbon coating layer is about 0.5 to about 1.5, the D/G ratio being expressed as a ratio of a maximum peak intensity of a D band to a maximum peak intensity of a G band in a Raman spectrum.

9. A method of manufacturing a negative electrode active material, the method comprising:
milling silicon precursors with a bead mill to produce first silicon particles and second silicon particles;
preparing an agglomerate of the first silicon particles;
forming a negative electrode active material precursor by coating the second silicon particles on a surface of the agglomerate; and
forming an amorphous carbon coating layer on the negative electrode active material precursor,
wherein an average particle diameter (D50) of the first silicon particles is greater than an average particle diameter (D50) of the second silicon particles,
wherein the average particle diameter (D50) of the first silicon particles is about 100 nm to about 140 nm, and
wherein the average particle diameter (D50) of the second silicon particles is about 40 nm to about 100 nm.

10. The method as claimed in claim 9, wherein the amorphous carbon coating layer surrounds the first silicon particles and the second silicon particles.

11. The method as claimed in claim 9 or claim 10, wherein, during milling of the silicon precursors, a milling time for the first silicon particles and a milling time of the second silicon particles are different.

12. The method as claimed in any one of claims 9 to 11, wherein a weight ratio of the first silicon particles to the second silicon particles in the negative electrode active material is about 1:4 to about 7:3.

13. A negative electrode comprising:
a negative electrode current collector; and
a negative electrode active material layer on the negative electrode current collector,
wherein a negative electrode active material in the negative electrode active material layer comprises:
a core formed by agglomerated first silicon particles;
a shell formed by agglomerated second silicon particles; and
an amorphous carbon coating layer surrounding the first silicon particles and the second silicon particles,
wherein the shell is disposed on the core,
wherein an average particle diameter (D50) of the first silicon particles is greater than an average particle diameter (D50) of the second silicon particles,
wherein each of the first silicon particles comprises a first silicon oxide layer on a surface thereof,
wherein each of the second silicon particles comprises a second silicon oxide layer on a surface thereof, and
wherein thicknesses of the first silicon oxide layer and the second silicon oxide layer are each about 1 nm to about 10 nm.

14. The method as claimed in claim 13, wherein the average particle diameter (D50) of the first silicon particles is about 100 nm to about 140 nm, and
wherein the average particle diameter (D50) of the second silicon particles is about 40 nm to about 100 nm.

15. The method as claimed in claim 13 or claim **14,** wherein an average particle diameter (D50) of the negative electrode active material is about 6 µm to about 12 µm.
